# EUROPEAN PATENT SPECIFICATION

(11) **EP 2 597 579 B1**
(45) Date of publication and mention of the grant of the patent: **20.07.2016**
(21) Application number: 10854943.7
(22) Date of filing: 22.11.2010
(51) Int. Cl.: G06F 11/14

(54) **DATABASE BACKING-UP AND RECOVERING METHOD AND DEVICE**
VERFAHREN UND VORRICHTUNG ZUR SICHERUNG UND WIEDERHERSTELLUNG VON DATENBANKEN
PROCÉDÉ ET DISPOSITIF DE SAUVEGARDE ET DE RÉCUPÉRATION DE BASES DE DONNÉES

(30) Priority: 20.07.2010 CN 201010233924
(43) Date of publication of application: 29.05.2013
(73) Proprietor: ZTE Corporation, Shenzhen, Guangdong 518057 (CN)
(72) Inventor: LONG, Tao, Guangdong 518057 (CN)
(74) Representative: V.O.
(86) International application number: PCT/CN2010/078972
(87) International publication number: WO 2012/009913

(56) References cited:
- CN-A- 1 317 742
- CN-A- 1 421 010
- CN-A- 1 614 566
- CN-A- 101 174 222
- CN-A- 101 174 222
- CN-A- 101 499 069
- CN-A- 101 499 069
- US-A1- 2010 082 553

## Description

### Field of the Invention

The present invention relates to the field of database, and in particular to a method and an apparatus for recovering a database backup.

### Background of the Invention

In the related art, the design of database structure (including table structure and data content) often transits with the changes of function modules, and the difference between various versions may be relatively large. Since the table structure and the data content between a new version and an old version are incompatible, when the backup of a current database is recovered, the old version database backup cannot be recovered into a new version database with the design of the database structure having changed.

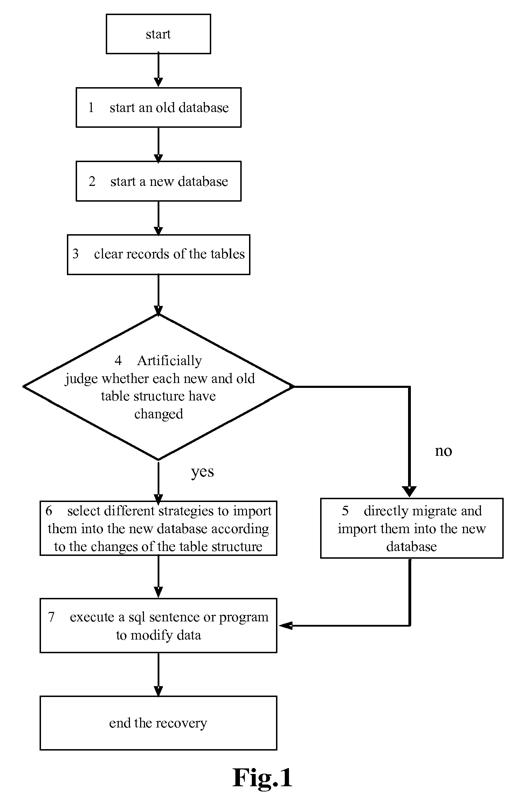

Fig. 1 shows a flow chart of a method for recovering a database backup in the related art. The process procedure usually used is as follows.
(1) An old version database is started.
(2) A new version database is started.
(3) The record of all the tables in the new version database is cleared.
(4) Whether each new and old table has changed is judged artificially.
(5) For a table with no change, the record of each table with the same table structures in the old database is migrated into the new database by using the data migration tool provided by a database management system.
(6) For each table with different table structures in the old database, which columns need to be discarded and which columns need to be performed such special strategies as data type conversion are judged by using the data migration tool provided by the database management system, and the record is migrated into the new database after a corresponding operation type is selected.
(7) If the record content of certain tables still requires special modifications to meet the requirements of the new version program, then a series of the sql sentences can be executed, or some programs can be executed to process.

The data recovery ends.

The process of the above steps is very cumbersome, especially the three steps of (4), (5), and (6), and in the cases that there are many tables, the operation is rather time-consuming.

CN101499069A discloses a method and apparatus for updating files of a memory database; CN101174222A discloses a method for updating a data version; and US2010/0082553A discloses a method for backing up and restoring selected versioned objects from a monolithic database backup.

### Summary of the Invention

A method and an apparatus for recovering a database backup are provided by the present invention to achieve the forward compatibility of database backup recovery.

According to one aspect of the present invention, which is defined in detail in the appended independent claims 1 and 9, a method for recovering a database backup is provided, comprising: backing up an old version database, wherein table structures of the old version database are stored; clearing records of all tables in a new version database, and acquiring table structures of the new version database; comparing the table structures of the old version database with the table structures of the new version database, and determining that the table structures of the new version database changes; and recovering the backup of the old version database into the new version database according to a type of the change and a corresponding preset strategy.

According to another aspect of the present invention, an apparatus for recovering a database backup is provided, comprising: a backup module, configured to back up an old version database, wherein table structures of the old version database are stored; an acquiring module, configured to clear records of all tables in a new version database, and acquire table structures of the new version database; a comparing module, configured to compare the table structures of the old version database with the table structures of the new version database, and determine that the table structures of the new version database changes; and a recovering module, configured to recover the backup of the old version database into the new version database according to a type of the change and a corresponding preset strategy.

The present invention solves the problem in the related art that the backup of an old version database cannot be recovered into a new version database with the design of database structure having changed by analyzing the change of table structures, and thereby the forward compatibility of database backup recovery is achieved.

### Brief Description of the Drawings

The drawings described herein are used to provide a further understanding of the present invention, which construct a part of the present invention. The exemplary embodiments and description of the present invention are used to explain the present invention, without unduly limiting the scope of the present invention. In the drawings:
Fig. 1 shows a flow chart of a method for recovering a database backup in the related art;
Fig. 2 shows a flow chart of a method for recovering a database backup according to one embodiment of the present invention;
Fig. 3 shows a flow chart of a method for recovering a database backup according to one preferred embodiment of the present invention; and
Fig. 4 shows a schematic diagram of an apparatus for recovering a database backup according to one embodiment of the present invention.

### Detailed Description of Embodiments

The present invention is described in detail with reference to the drawings in combination with the embodiments as follows. It needs to be explained that the embodiments of the application and the characteristics of the embodiments can be combined with each other if there is no conflict.

A database generally comprises a plurality of data tables, wherein each data table is consisted of a plurality of columns and each column has a data structure. The embodiments of the present invention are implemented on the basis of this database.

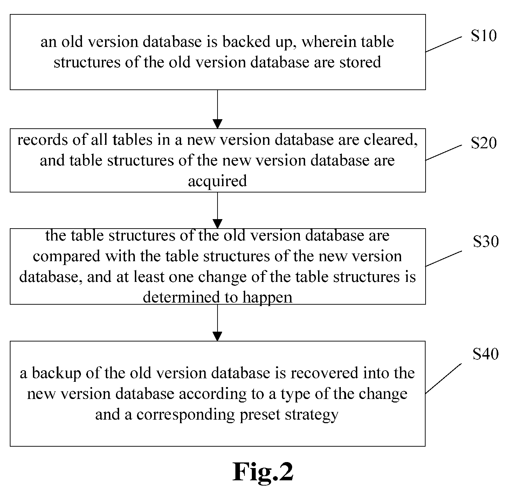

Fig. 2 shows a flow chart of a method for recovering a database backup according to one embodiment of the present invention, wherein the method comprises the steps as follows.
Step S10, an old version database is backed up, wherein table structures of the old version database are stored. For example, the required table structure information, table data and current version number in the old version are backed up and stored in the form of file.
Step S20, records of all tables in a new version database are cleared, and table structures of the new version database are acquired.
Step S30, the table structures of the old version database are compared with the table structures of the new version database, and at least one change of the table structures is determined to happen.
Step S40, the backup of the old version database is recovered into the new version database according to a type of the change and a corresponding preset strategy.

This embodiment solves the problem in the related art that the old version database backup cannot be recovered into a new version database with the design of database structure having changed by analyzing the change of the table structures, and thereby the forward compatibility of database backup recovery is achieved.

Preferably, the step that at least one change of the table structures is determined to happen comprises: at least one change as follows is determined to happen to the table structures of the new version database.
1. A table is deleted in the new version database.
2. A table is added in the new version database.
3. A table is renamed in the new version database.
4. A column is deleted in a table in the new version database.
5. A column is added in a table in the new version database.
6. A column is renamed in a table in the new version database.
7. An order of a column in a table changes in the new version database.
8. A data type of a column in a table changes in the new version database.

The above changes of the database structures may appear alone or may appear together by combination. For example, such case may appear in the new version: a certain table A is renamed as table B, and meanwhile a certain column α in table B is also deleted. Furthermore, the above tables or columns are not limited to one or more.

In this embodiment, various changes of the database structures are concluded to the above eight categories finally by a large amount of analysis and researches. The changes of the above eight categories can be easily identified by comparing the table structures.

Preferably, the corresponding preset strategy comprises at least one as follows.
1. For the change 1, the recovery of the deleted table is skipped over.
2. For the change 2, the recovery of the new added table is skipped over.
3. For the change 3, the renamed table in the backup is recovered into the renamed table in the new version database.
4. For the change 4, the recovery of the deleted column is skipped over.
5. For the change 5, if a default value is preset, then the new added column is set as the default value, and if no default value is preset, then the new added column is set as a NULL value, or an indicated value; or the recovery of the new added column is skipped over.
6. For the change 6, the renamed column in the backup is recovered into the renamed column in the new version database.
7. For the change 7, the column in the backup is recovered into the column in the new version database according to the new order.
8. For the change 8, the value of the column in the backup is converted into a new data type, and then the value is recovered into the column of the new version database. If the value cannot be converted, then the column of the new version database is recovered as a designated value.

By performing the above compatible processing, all eight changes of the structure design of the new and old version databases can be adapted, and thereby the forward compatibility of database backup recovery is well achieved, which can be applied to most of the scenarios.

Preferably, this method further comprises creating an XML file in advance, and recovering the backup of the old version database into the new version database by analyzing the XML file, wherein the XML file comprises at least one of the rules of performing the preset strategies 3, 5, 6, and 8. The preset strategies 3, 5, 6, and 8 are relatively special, and they are required to flexibly adapt to the user settings, so it is not suitable for them to be directly solidified into a program. However, the XML file can be easily edited by a user, so it is suitable for configuring the rules of the preset strategies 3, 5, 6, and 8.

Preferably, the XML file further comprises at least one rule as follows.

Column modification rule: indicating to set the value of a column designated in the new version database to be a default value.

Column deletion rule: indicating to set the value of a column designated in the new version database to be a NULL value.

Table modification rule: indicating to use the combination of the column modification rule and the column deletion rule for a plurality of columns in the table in the new version database.

Post-processing rule: indicating to modify the data in the new version database by executing a SQL sentence or a dedicated code segment on the basis that the backup has been recovered into the new version database.

In some scenarios, the structure of the new version database may not change, but a user expects to freely set the content of the table in the new version database, i.e. the user does not desire to directly recover the content in the backup into the new version database but desire to be able to change the content during the recovery. However, this embodiment well meets the above requirements of the user by configuring the above rules in the XML file.

Preferably, this method further comprises creating an executive program in advance and directly executing at least one of the rules of the preset strategies 1, 2, 4, and 7 according to the executive program. Since the preset strategies 1, 2, 4 and 7 are relatively simple, and they do not require the user to configure, a program can be directly written in to relieve the burden of user operations and accelerate execution speed.

Preferably, the backup of the old version database is recovered into the new version database by means of bcp (block copy), which can increase the speed of recovering backup.

Preferably, the information of the table structures comprises: database name, table name, column name, column length and column data type. It can be very easy to judge whether the structures of the new and old version databases have changed by using the information.

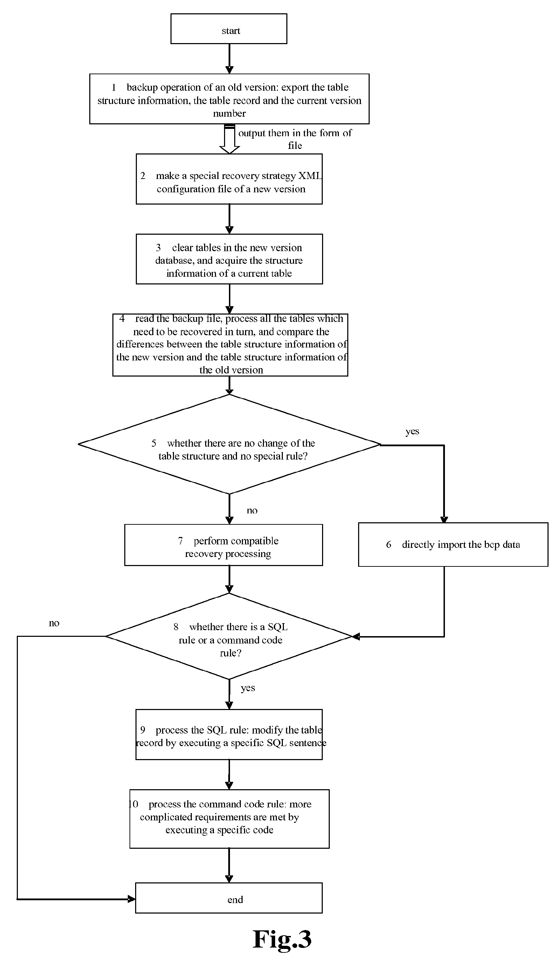

Fig. 3 shows a flow chart of a method for recovering a database backup according to one preferred embodiment of the present invention. This preferred embodiment combines the technical solutions of the above embodiments and comprises the steps as follows.
1. A backup operation is performed in an old version, the structure information, the table data and the current version number of all the relevant tables which need to be backed up are exported as files, and uniformly stored into a single folder.
2. For a new version, a special recovery strategy XML configuration file is created, and all the processing steps that require manual intervention are written into the XML configuration file according to a specific rule. In the situation that all differences can be automatically identified by the backup recovery program, then this XML configuration file can be set as NULL. The backup folder is copied into the new version software for starting to perform a recovery operation.
3. Firstly the records of all the relevant tables in the new version database are cleared, and the structure information of each table are acquired, which comprises database name, table name, all column names contained, column length and column data type.
4. The structure information of all the relevant tables backed up in the backup folder is read, each backup table is processed in turn, the differences between the table structure of the new version and the table structure of the old version are compared, and whether a special rule is preset in the XML configuration file is judged.
5. Whether there are no change of the table structure and no special rule is judged. If the judgment result is YES, then step 6 is performed, otherwise step 7 is performed.
6. If the table structure of the current backup table does not change and no specific recovery strategy is designated in the XML configuration file, then directly a table data file is imported by means of using the bcp, and the backup record is recovered into the database.
7. If the table structure of the current backup table changes or a specific recovery strategy is designated in the XML configuration file, then the recovery program performs compatible processing according to the specific rule.
8. After all the backup files are imported into the database, the SQL rule and the command code rule in the XML configuration file are checked. If there is no SQL rule, then the recovery process can be ended.
9. If there is a SQL rule, then all the SQL sentences designated in this rule are executed in turn to modify the current data in the database.
10. Finally the command code rule in the XML configuration file is checked, the specific code corresponding to each command code is executed in turn to modify the current data in the database.

The recovery operation ends.

Various compatibility problems of the database content are solved by this embodiment by means of combining the backup recovery program with the specific recovery strategy XML configuration file. The requirements of most application scenarios can be met by appropriately adjusting the rules of the XML file. At the same time, the speed of backup recovery can be improved by using the bcp import and export mode.

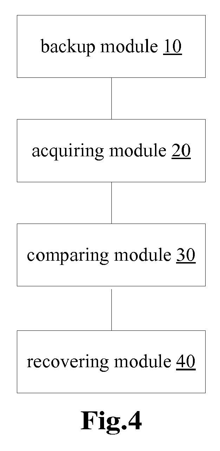

Fig. 4 shows a schematic diagram of an apparatus for recovering a database backup according to one embodiment of the present invention, wherein the apparatus comprises:
a backup module **10,** configured to back up an old version database, wherein table structures of the old version database are stored;
an acquiring module **20,** configured to clear records of all tables in a new version database, and acquire table structures of the new version database;
a comparing module **30,** configured to compare the table structures of the old version database with the table structures of the new version database, and determine that the table structures change; and
a recovering module **40,** configured to recover a backup of the old version database into the new version database according to a type of the change and a corresponding preset strategy.

This embodiment solves the problem in the related art that the old version database backup cannot be recovered into a new version database with the design of database structure having changed by analyzing the change of the table structures, and thereby the forward compatibility of database backup recovery is achieved.

Preferably, the comparing module **30** is configured to determine that the table structures change comprises: the comparing module **30** is configured to determine that at least one change as follows happens to the table structures of the new version database.

A table is deleted in the new version database.

A table is added in the new version database.

A table is renamed in the new version database.

A column is deleted in a table in the new version database.

A column is added in a table in the new version database.

A column is renamed in a table in the new version database.

The order of a column in a table changes in the new version database.

The data type of a column in a table changes in the new version database.

It can be very easy to identify the changes of the above eight categories by comparing the table structures.

Preferably, in the above apparatus, the corresponding preset strategy comprises at least one as follows.

For the change 1, the recovery of the deleted table is skipped over.

For the change 2, the recovery of the new added table is skipped over.

For the change 3, the renamed table in the backup is recovered into the renamed table in the new version database.

For the change 4, the recovery of the deleted column is skipped over.

For the change 5, if a default value is preset, then the new added column is set as the default value, and if no default value is preset, then the new added column is set as a NULL value, or an indicated value; or the recovery of the new added column is skipped over.

For the change 6, the renamed column in the backup is recovered into the renamed column in the new version database.

For the change 7, the column in the backup is recovered into the column in the new version database, according to the new order.

For the change 8, the value of the column in the backup is converted into a new data type, and then the value is recovered into the column of the new version database. If the value cannot be converted, then the column of the new version database is recovered as a designated value.

By performing the above compatible processing, all eight changes of the structure design of the new and old version databases can be adapted, and thereby the forward compatibility of database backup recovery is well achieved, which can be applied to most of the scenarios.

It can be known from the above description that, by the present invention, the database content can be recovered from the old version software environment into the new version software environment quickly, and the compatibility problem brought about by the changes of the database structure is solved. As to the difference of various different database structures, it is only required to simply modify the XML configuration file to meet the requirements of forwardly compatible backup recovery.

Apparently, those skilled in the art shall understand that the above modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, and in some cases, the shown or described steps can be performed in sequence other than herein, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art.

## Claims

1. A method for recovering a database backup, **characterized by** comprising:
backing up an old version database, wherein table structures of the old version database are stored (S10);
acquiring table structures of a new version database (S20);
comparing the table structures of the old version database with the table structures of the new version database, and determining that the table structures have changed (S30); and
recovering the backup of the old version database into the new version database according to the type of the change of the table structures and a corresponding preset strategy (S40),
wherein determining that the table structures have changed comprises: determining that at least one of the following changes to the table structures of the new version database has occurred:
change 3: a table is renamed in the new version database;
change 6: a column is renamed in a table in the new version database; and
change 8: a data type of a column in a table changes in the new version database,
wherein the corresponding preset strategy comprises at least one as follows:
strategy 3: for the change 3, recovering the renamed table in the backup into the renamed table in the new version database;
strategy 6: for the change 6, recovering the renamed column in the backup into the renamed column in the new version database; and
strategy 8: for the change 8, converting the value of the column in the backup into the new data type, then recovering the value into the column of the new version database, and if the value cannot be converted, then recovering the column of the new version database as a designated value.

2. The method according to Claim 1, **characterized in that** determining that the table structures change further comprises: determining at least one change as follows happens to the table structures of the new version database:
change 1: a table is deleted in the new version database;
change 2: a table is added in the new version database;
change 4: a column is deleted in a table in the new version database;
change 5: a column is added in a table in the new version database; and
change 7: an order of a column in a table changes in the new version database.

3. The method according to Claim 2, **characterized in that** the corresponding preset strategy further comprises at least one as follows:
strategy 1: for the change 1, skipping over the recovery of the deleted table;
strategy 2: for the change 2, skipping over the recovery of the new added table;
strategy 4: for the change 4, skipping over the recovery of the deleted column;
strategy 5: for the change 5, if a default value is preset, then setting the new added column as the default value, and if no default value is preset, then setting the new added column as a NULL value, or an indicated value; or skipping over the recovery of the new added column; and
strategy 7: for the change 7, recovering the column in the backup into the column in the new version database according to the new order.

4. The method according to Claim 3, **characterized in that** the method further comprises: creating a configuration file in advance, and recovering the backup of the old version database into the new version database by analyzing the configuration file, wherein the configuration file comprises at least one of the rules of performing the preset strategies 3, 5, 6, and 8.

5. The method according to Claim 4, **characterized in that** the configuration file further comprises at least one rule as follows:
column modification rule: indicating to set the value of the column designated in the new version database to be the default value;
column deletion rule: indicating to set the value of the column designated in the new version database to be the NULL value;
table modification rule: indicating to use the combination of the column modification rule and the column deletion rule for a plurality of columns of the table in the new version database; and
post-processing rule: indicating to modify the data in the new version database by executing a SQL sentence or a dedicated code segment on the basis that the backup has already been recovered into the new version database.

6. The method according to Claim 3, **characterized in that** the method further comprises: creating an executive program in advance and executing at least one of the rules of the preset strategies 1, 2, 4, and 7 directly according to the executive program.

7. The method according to Claim 1, **characterized in that** the backup of the old version database is recovered into the new version database by means of block copy (bcp).

8. The method according to Claim 1, **characterized in that** the information of the table structures comprises: database name, table name, column name, column length and column data type.

9. An apparatus for recovering a database backup, comprising:
a backup module (10), configured to back up an old version database, wherein table structures of the old version database are stored;
an acquiring module (20), configured to acquire table structures of a new version database;
a comparing module (30), configured to compare the table structures of the old version database with the table structures of the new version database, and determine that the table structures have changed; and
a recovering module (40), configured to recover the backup of the old version database into the new version database according to the type of the change of the table structures and a corresponding preset strategy;
wherein determining that the table structures have changed comprises: the comparing module is configured to determine that at least one of the following changes to the table structures of the new version database has occurred:
change 3: a table is renamed in the new version database;
change 6: a column is renamed in a table in the new version database; and
change 8: a data type of a column in a table changes in the new version database,
wherein the corresponding preset strategy comprises at least one as follows:
strategy 3: for the change 3, recovering the renamed table in the backup into the renamed table in the new version database;
strategy 6: for the change 6, recovering the renamed column in the backup into the renamed column in the new version database; and
strategy 8: for the change 8, converting the value of the column in the backup into the new data type, then recovering the value into the column of the new version database, and if the value cannot be converted, then recovering the column of the new version database as a designated value.

10. The apparatus according to Claim 9, **characterized in that** the comparing module determining that the table structures change further comprises: the comparing module is configured to determine that at least one as follows happens to the table structures of the new version database:
change 1: a table is deleted in the new version database;
change 2: a table is added in the new version database;
change 4: a column is deleted in a table in the new version database;
change 5: a column is added in a table in the new version database; and
change 7: an order of a column in a table changes in the new version database.

11. The apparatus according to Claim 10, **characterized in that** the corresponding preset strategy further comprises at least one as follows:
strategy 1: for the change 1, skipping over the recovery of the deleted table;
strategy 2: for the change 2, skipping over the recovery of the new added table;
strategy 4: for the change 4, skipping over the recovery of the deleted column;
strategy 5: for the change 5, if a default value is preset, then setting the new added column as the default value, and if no default value is preset, then setting the new added column as a NULL value, or an indicated value; or skipping over the recovery of the new added column; and
strategy 7: for the change 7, recovering the column in the backup into the column in the new version database according to the new order.

## Patentansprüche

1. Verfahren zur Wiederherstellung einer Datenbanksicherungskopie, **dadurch gekennzeichnet, dass** es Folgendes umfasst:
Sichern einer alten Datenbankversion, wobei Tabellenstrukturen der alten Datenbankversion gespeichert werden (S10);
Sammeln von Tabellenstrukturen von einer neuen Datenbankversion (S20);
Vergleichen der Tabellenstrukturen der alten Datenbankversion mit den Tabellenstrukturen der neuen Datenbankversion und Bestimmen, dass sich die Tabellenstrukturen geändert haben (S30); und
Wiederherstellen der Sicherungskopie der alten Datenbankversion in der neuen Datenbankversion gemäß der Art der Änderung der Tabellenstrukturen und einer entsprechenden voreingestellten Strategie (S40);
wobei das Bestimmen, dass sich die Tabellenstrukturen geändert haben, umfasst, dass:
bestimmt wird, dass mindestens eine der folgenden Änderungen der Tabellenstrukturen der neuen Datenbankversion stattgefunden hat:
Änderung 3: eine Tabelle ist in der neuen Datenbankversion umbenannt;
Änderung 6: eine Spalte ist in einer Tabelle in der neuen Datenbankversion umbenannt; und
Änderung 8: ein Datentyp einer Spalte in einer Tabelle ändert sich in der neuen Datenbankversion,
wobei die entsprechende voreingestellte Strategie mindestens eine der Folgenden umfasst:
Strategie 3: für die Änderung 3, das Wiederherstellen der umbenannten Tabelle in der Sicherungskopie in die umbenannte Tabelle in der neuen Datenbankversion;
Strategie 6: für die Änderung 6, das Wiederherstellen der umbenannten Spalte in der Sicherungskopie in die umbenannte Spalte in der neuen Datenbankversion; und
Strategie 8: für die Änderung 8, das Konvertieren des Wertes der Spalte in der Sicherungskopie in den neuen Datentyp, dann Wiederherstellen des Wertes in der Spalte der neuen Datenbankversion und, falls der Wert nicht konvertiert werden kann, dann Wiederherstellen der Spalte der neuen Datenbankversion als zugewiesener Wert.

2. Verfahren nach Anspruch 1, **dadurch gekennzeichnet, dass** das Bestimmen, dass sich die Tabellenstrukturen geändert haben, ferner umfasst:
Bestimmen, dass mindestens eine der folgenden Änderungen in den Tabellenstrukturen der neuen Datenbankversion passiert:
Änderung 1: eine Tabelle ist in der neuen Datenbankversion gelöscht;
Änderung 2: eine Tabelle ist in der neuen Datenbankversion hinzugefügt;
Änderung 4: eine Spalte ist in einer Tabelle in der neuen Datenbankversion gelöscht; und
Änderung 5: eine Spalte ist in einer Tabelle in der neuen Datenbankversion hinzugefügt; und
Änderung 7: eine Reihenfolge einer Spalte in einer Tabelle ändert sich in der neuen Datenbankversion.

3. Verfahren nach Anspruch 2, **dadurch gekennzeichnet, dass** die entsprechende voreingestellte Strategie ferner mindestens eine der folgenden umfasst:
Strategie 1: für die Änderung 1, das Überspringen der Wiederherstellung der gelöschten Tabelle;
Strategie 2: für die Änderung 2, das Überspringen der Wiederherstellung der neu hinzugefügten Tabelle;
Strategie 4: für die Änderung 4, das Überspringen der Wiederherstellung der gelöschten Spalte;
Strategie 5: für die Änderung 5, wenn ein Vorgabewert voreingestellt ist, dann das Einstellen der neu hinzugefügten Spalte als Vorgabewert, und, wenn kein Vorgabewert voreingestellt ist, dann das Einstellen der neu hinzugefügten Spalte als ein NULL-Wert oder ein angegebener Wert; oder Überspringen der Wiederherstellung der neu hinzugefügten Spalte; und
Strategie 7: für die Änderung 7, das Wiederherstellen der Spalte in der Sicherungskopie in die Spalte in der neuen Datenbankversion gemäß der neuen Reihenfolge.

4. Verfahren nach Anspruch 3, **dadurch gekennzeichnet, dass** das Verfahren ferner umfasst: das Erstellen einer Konfigurationsdatei im Voraus und das Wiederherstellen der Sicherungskopie der alten Datenbankversion in die neue Datenbankversion durch Analysieren der Konfigurationsdatei, wobei die Konfigurationsdatei mindestens eine der Regeln zur Durchführung der voreingestellten Strategien 3, 5, 6 und 8 umfasst.

5. Verfahren nach Anspruch 4, **dadurch gekennzeichnet, dass** die Konfigurationsdatei ferner mindestens eine Regel wie folgt umfasst:
Spaltenänderungsregel: das Angeben, den Wert der bezeichneten Spalte in der neuen Datenbankversion als Vorgabewert einzustellen;
Spaltenlöschungsregel: das Angeben, den Wert der bezeichneten Spalte in der neuen Datenbankversion als NULL-Wert einzustellen;
Tabellenänderungsregel: das Angeben, die Daten in der neuen Datenbankversion durch Ausführen eines SQL-Satzes oder eines dedizierten Codesegments auf der Grundlage, dass die Sicherungskopie bereits in die neue Datenbankversion wiederhergestellt wurde.

6. Verfahren nach Anspruch 3, **dadurch gekennzeichnet, dass** das Verfahren ferner umfasst: das Erstellen eines ausführbaren Programms im Voraus und Ausführen von mindestens einer der Regeln der voreingestellten Strategien 1, 2, 4 und 7 direkt gemäß dem ausführbaren Programm.

7. Verfahren nach Anspruch 1, **dadurch gekennzeichnet, dass** die Sicherungskopie der alten Datenbankversion in die neue Datenbankversion mittels Block Copy (bcp) wiederhergestellt ist.

8. Verfahren nach Anspruch 1, **dadurch gekennzeichnet, dass** die Information der Tabellenstrukturen umfasst: Datenbankname, Tabellenname, Spaltenname, Spaltenlänge und Spaltendatentyp.

9. Vorrichtung zur Wiederherstellung einer DatenbankSicherungskopie, umfassend:
ein Sicherungsmodul (10), konfiguriert zum Sichern einer alten Datenbankversion, wobei Tabellenstrukturen der alten Datenbankversion gespeichert werden;
ein Sammelmodul (20), konfiguriert zum Sammeln von Tabellenstrukturen einer neuen Datenbankversion;
ein Vergleichsmodul (30), konfiguriert zum Vergleichen der Tabellenstrukturen der alten Datenbankversion mit den Tabellenstrukturen der neuen Datenbankversion und Bestimmen, dass sich die Tabellenstrukturen geändert haben; und
ein Wiederherstellungsmodul (40), konfiguriert zum Wiederherstellen der Sicherungskopie der alten Datenbankversion in die neue Datenbankversion gemäß dem Typ der Änderung der Tabellenstrukturen und einer entsprechenden voreingestellten Strategie;
wobei das Bestimmen, dass sich die Tabellenstrukturen geändert haben, umfasst: das Vergleichsmodul ist konfiguriert zu bestimmen, dass mindestens eine der folgenden Änderungen an den Tabellenstrukturen der neuen Datenbankversion stattgefunden hat:
Änderung 3: eine Tabelle ist in der neuen Datenbankversion umbenannt;
Änderung 6: eine Spalte ist in einer Tabelle in der neuen Datenbankversion umbenannt; und
Änderung 8: ein Datentyp einer Spalte in einer Tabelle ändert sich in der neuen Datenbankversion,
wobei die entsprechende voreingestellte Strategie mindestens eine der Folgenden umfasst:
Strategie 3: für die Änderung 3, das Wiederherstellen der umbenannten Tabelle in der Sicherungskopie in die umbenannte Tabelle in der neuen Datenbankversion;
Strategie 6: für die Änderung 6, das Wiederherstellen der umbenannten Spalte in der Sicherungskopie in die umbenannte Spalte in der neuen Datenbankversion; und
Strategie 8: für die Änderung 8, das Konvertieren des Wertes der Spalte in der Sicherungskopie in den neuen Datentyp, dann Wiederherstellen des Wertes in der Spalte der neuen Datenbankversion und, falls der Wert nicht konvertiert werden kann, dann Wiederherstellen der Spalte der neuen Datenbankversion als zugewiesener Wert.

10. Vorrichtung nach Anspruch 9, **dadurch gekennzeichnet, dass** das Vergleichsmodul bestimmt, dass sich die Tabellenstrukturen ändern, ferner umfasst: das Vergleichsmodul ist konfiguriert zu bestimmen, dass mindestens eines der Folgenden an den Tabellenstrukturen der neuen Datenbankversion passiert:
Änderung 1: eine Tabelle ist in der neuen Datenbankversion gelöscht;
Änderung 2: eine Tabelle ist in der neuen Datenbankversion hinzugefügt;
Änderung 4: eine Spalte ist in einer Tabelle in der neuen Datenbankversion gelöscht; und
Änderung 5: eine Spalte ist in einer Tabelle in der neuen Datenbankversion hinzugefügt; und
Änderung 7: eine Reihenfolge einer Spalte in einer Tabelle ändert sich in der neuen Datenbankversion.

11. Vorrichtung nach Anspruch 10, **dadurch gekennzeichnet, dass** die entsprechende voreingestellte Strategie ferner mindestens eine der Folgenden umfasst:
Strategie 1: für die Änderung 1, das Überspringen der Wiederherstellung der gelöschten Tabelle;
Strategie 2: für die Änderung 2, das Überspringen der Wiederherstellung der neu hinzugefügten Tabelle;
Strategie 4: für die Änderung 4, das Überspringen der Wiederherstellung der gelöschten Spalte;
Strategie 5: für die Änderung 5, wenn ein Vorgabewert voreingestellt ist, dann das Einstellen der neu hinzugefügten Spalte als Vorgabewert, und, wenn kein Vorgabewert voreingestellt ist, dann das Einstellen der neu hinzugefügten Spalte als ein NULL-Wert oder ein angegebener Wert; oder Überspringen der Wiederherstellung der neu hinzugefügten Spalte; und
Strategie 7: für die Änderung 7, das Wiederherstellen der Spalte in der Sicherungskopie in die Spalte in der neuen Datenbankversion gemäß der neuen Reihenfolge.

## Revendications

1. Procédé pour récupérer une sauvegarde de base de données, **caractérisé en ce qu'**il comprend :
la sauvegarde d'une base de données d'ancienne version, où des structures de table de la base de données d'ancienne version sont stockées (S10) ;
l'acquisition de structures de table d'une base de données de nouvelle version (S20) ;
la comparaison des structures de table de la base de données d'ancienne version avec les structures de table de la base de données de nouvelle version, et la détermination que les structures de table ont changé (S30) ; et
la récupération de la sauvegarde de la base de données d'ancienne version en la base de données de nouvelle version selon le type du changement des structures de table et une stratégie préétablie correspondante (S40),
dans lequel la détermination que les structures de table ont changé comprend : la détermination qu'au moins un des changements suivants sur les structures de table de la base de données de nouvelle version s'est produit :
changement 3 : une table est renommée dans la base de données de nouvelle version ;
changement 6 : une colonne est renommée dans une table dans la base de données de nouvelle version ; et
changement 8 : un type de données d'une colonne dans une table change dans la base de données de nouvelle version,
dans lequel la stratégie préétablie correspondante comprend au moins une comme suit :
stratégie 3 : pour le changement 3, récupérer la table renommée dans la sauvegarde en la table renommée dans la base de données de nouvelle version ;
stratégie 6 : pour le changement 6, récupérer la colonne renommée dans la sauvegarde en la colonne renommée dans la base de données de nouvelle version ; et
stratégie 8 : pour le changement 8, convertir la valeur de la colonne dans la sauvegarde en le nouveau type de données, puis récupérer la valeur dans la colonne de la base de données de nouvelle version, et si la valeur ne peut pas être convertie, récupérer alors la colonne de la base de données de nouvelle version comme une valeur désignée.

2. Procédé selon la revendication 1, **caractérisé en ce que** la détermination que les structures de table changent comprend en outre : la détermination qu'au moins un changement comme suit se produit sur les structures de table de la base de données de nouvelle version :
Changement 1 : une table est supprimée dans la base de données de nouvelle version ;
Changement 2 : une table est ajoutée dans la base de données de nouvelle version ;
Changement 4 : une colonne est supprimée dans une table dans la base de données de nouvelle version ;
Changement 5 : une colonne est ajoutée dans une table dans la base de données de nouvelle version ; et
Changement 7 : un ordre d'une colonne dans une table change dans la base de données de nouvelle version.

3. Procédé selon la revendication 2, **caractérisé en ce que** la stratégie préétablie correspondante comprend au moins une comme suit :
Stratégie 1 : pour le changement 1, sauter la récupération de la table supprimée ;
Stratégie 2 : pour le changement 2, sauter la récupération de la nouvelle table ajoutée ;
Stratégie 4 : pour le changement 4, sauter la récupération de la colonne supprimée ;
Stratégie 5 : pour le changement 5, si une valeur par défaut est préétablie, établir alors la nouvelle colonne ajoutée comme la valeur par défaut, et si aucune valeur par défaut n'est préétablie, établir alors la nouvelle colonne ajoutée comme une valeur NUL, ou une valeur indiquée ; ou sauter la récupération de la nouvelle colonne ajoutée ; et
Stratégie 7 : pour le changement 7, récupérer la colonne dans la sauvegarde en la colonne dans la base de données nouvelle version selon le nouvel ordre.

4. Procédé selon la revendication 3, **caractérisé en ce que** le procédé comprend en outre : la création d'un fichier de configuration à l'avance, et la récupération de la sauvegarde de la base de données d'ancienne version en la base de données de nouvelle version en analysant le fichier de configuration, où le fichier de configuration comprend au moins une des règles d'exécution des stratégies préétablies 3, 5, 6, et 8.

5. Procédé selon la revendication 4, **caractérisé en ce que** le fichier de configuration comprend en outre au moins une règle comme suit :
règle de modification de colonne : indiquer d'établir la valeur de la colonne désignée dans la base de données de nouvelle version pour être la valeur par défaut ;
règle de suppression de colonne : indiquer d'établir la valeur de la colonne désignée dans la base de données de nouvelle version pour être la valeur NUL ;
règle de modification de table : indiquer d'utiliser la combinaison de la règle de modification de colonne et de la règle de suppression de colonne pour une pluralité de colonnes de la table dans la base de données de nouvelle version ; et
règle de post-traitement : indiquer de modifier les données dans la base de données de nouvelle version en exécutant une phrase SQL ou un segment de code dédié sur la base que la sauvegarde a déjà été récupérée en la base de données de nouvelle version.

6. Procédé selon la revendication 3, **caractérisé en ce que** le procédé comprend en outre : la création d'un programme exécutif à l'avance et l'exécution d'au moins une des règles des stratégies préétablies 1, 2, 4, et 7 directement selon le programme exécutif.

7. Procédé selon la revendication 1, **caractérisé en ce que** la sauvegarde de la base de données d'ancienne version est récupérée en la base de données de nouvelle version au moyen de copie de bloc (bcp).

8. Procédé selon la revendication 1, **caractérisé en ce que** les informations des structures de table comprennent : nom de base de données, nom de table, nom de colonne, longueur de colonne et type de données de colonne.

9. Appareil pour récupérer une sauvegarde de base de données, comprenant :
un module de sauvegarde (10), configuré pour sauvegarder une base de données d'ancienne version, où des structures de table de la base de données d'ancienne version sont stockées ;
un module d'acquisition (20), configuré pour acquérir des structures de table d'une base de données de nouvelle version ;
un module de comparaison (30), configuré pour comparer les structures de table de la base de données d'ancienne version avec les structures de table de la base de données de nouvelle version, et déterminer que les structures de table ont changé ; et
un module de récupération (40), configuré pour récupérer la sauvegarde de la base de données d'ancienne version en la base de données de nouvelle version selon le type du changement des structures de table et une stratégie préétablie correspondante ;
dans lequel la détermination que les structures de table ont changé comprend : le module de comparaison est configuré pour déterminer qu'au moins un des changements suivants sur les structures de table de la base de données de nouvelle version s'est produit :
changement 3 : une table est renommée dans la base de données de nouvelle version ;
changement 6 : une colonne est renommée dans une table dans la base de données de nouvelle version ; et
changement 8 : un type de données d'une colonne dans une table change dans la base de données de nouvelle version,
dans lequel la stratégie préétablie correspondante comprend au moins une comme suit :
stratégie 3 : pour le changement 3, récupérer la table renommée dans la sauvegarde en la table renommée dans la base de données de nouvelle version ;
stratégie 6 : pour le changement 6, récupérer la colonne renommée dans la sauvegarde en la colonne renommée dans la base de données de nouvelle version ; et
stratégie 8 : pour le changement 8, convertir la valeur de la colonne dans la sauvegarde en le nouveau type de données, puis récupérer la valeur dans la colonne de la base de données de nouvelle version, et si la valeur ne peut pas être convertie, récupérer alors la colonne de la base de données de nouvelle version comme une valeur désignée.

10. Appareil selon la revendication 9, **caractérisé en ce que** le module de comparaison déterminant que les structures de table changent comprend en outre : le module de comparaison est configuré pour déterminer qu'au moins un comme suit se produit sur les structures de table de la base de données de nouvelle version :
changement 1 : une table est supprimée dans la base de données de nouvelle version ;
changement 2 : une table est ajoutée dans la base de données de nouvelle version ;
changement 4 : une colonne est supprimée dans une table dans la base de données de nouvelle version ;
changement 5 : une colonne est ajoutée dans une table dans la base de données de nouvelle version ; et
changement 7 : un ordre d'une colonne dans une table change dans la base de données de nouvelle version.

11. Appareil selon la revendication 10, **caractérisé en ce que** la stratégie préétablie correspondante comprend au moins une comme suit :
Stratégie 1 : pour le changement 1, sauter la récupération de la table supprimée ;
Stratégie 2 : pour le changement 2, sauter la récupération de la nouvelle table ajoutée ;
Stratégie 4 : pour le changement 4, sauter la récupération de la colonne supprimée ;
Stratégie 5 : pour le changement 5, si une valeur par défaut est préétablie, établir alors la nouvelle colonne ajoutée comme la valeur par défaut, et si aucune valeur par défaut n'est préétablie, établir alors la nouvelle colonne ajoutée comme une valeur NUL, ou une valeur indiquée ; ou sauter la récupération de la nouvelle colonne ajoutée ; et
stratégie 7 : pour le changement 7, récupérer la colonne dans la sauvegarde en la colonne dans la base de données de nouvelle version selon le nouvel ordre.
